Europäisches Patentamt

European Patent Office

Office européen des brevets

(11) Numéro de publication : **0 389 316 B1**

# (12) FASCICULE DE BREVET EUROPEEN

(45) Date de publication du fascicule du brevet :
**30.12.92 Bulletin 92/53**

(51) Int. Cl.$^5$ : **C03B 35/16,** C03B 23/03,
B65G 49/06

(21) Numéro de dépôt : **90400471.0**

(22) Date de dépôt : **21.02.90**

(54) **Positionnement d'une feuille de verre défilant sur un convoyeur.**

(30) Priorité : **24.03.89 FR 8903935**

(43) Date de publication de la demande :
**26.09.90 Bulletin 90/39**

(45) Mention de la délivrance du brevet :
**30.12.92 Bulletin 92/53**

(84) Etats contractants désignés :
**BE CH DE ES GB IT LI LU SE**

(56) Documents cités :
**EP-A- 0 267 120**
**FR-A- 2 370 657**
**US-A- 4 493 412**
**US-A- 4 775 404**

(73) Titulaire : **SAINT-GOBAIN VITRAGE
INTERNATIONAL**
"Les Miroirs" **18, avenue d'Alsace
F-92400 Courbevoie (FR)**

(72) Inventeur : **Letemps, Bernard
5, avenue du Gros Buisson
F-60150 Thourotte (FR)**
Inventeur : **Dereims, Philippe
19, rue des Domeliers
F-60200 Compiègne (FR)**

(74) Mandataire : **Menes, Catherine et al
SAINT-GOBAIN RECHERCHE 39, Quai Lucien
Lefranc
F-93300 Aubervilliers (FR)**

Il est rappelé que : Dans un délai de neuf mois à compter de la date de publication de la mention de la
délivrance du brevet européen toute personne peut faire opposition au brevet européen délivré, auprès
de l'Office européen des brevets. L'opposition doit être formée par écrit et motivée. Elle n'est réputée
formée qu'après paiement de la taxe d'opposition (Art. 99(1) Convention sur le brevet européen).

## Description

L'invention concerne le positionnement d'une feuille de verre défilant sur un convoyeur, comme mentionné dans les préambules des revendications 1 et 7 en particulier d'une feuille de verre chauffée au-delà de sa température de ramollissement en vue de son bombage et/ou d'un traitement thermique destiné à modifier certaines de ses caractéristiques mécaniques. L'invention s'applique notamment à la production de vitrages de véhicules automobiles.

Pour fournir une feuille de verre correcte, avec une bonne conformité du galbe et une qualité optique satisfaisant les exigences les plus grandes, il importe entre autres critères que la feuille de verre soit correctement positionnée avant d'être prise en charge par les outils de bombage et/ou de traitement thermique. Or une feuille de verre chauffée au-delà de sa température de ramollissement ne peut être tenue par des pinces ou autres organes de préhension, sauf à tolérer les marques que ces organes laissent obligatoirement. Par ailleurs, mettre la feuille de verre en place par rapport aux outils avant de la chauffer, c'est immobiliser ces outils pour une durée exceptionnellement longue, ce qui entraîne des coûts de production très grands.

Ces problèmes de marques de pinces et d'immobilisation des outils sont nettement minorés avec les procédés de bombage et/ou de traitement thermique dont la première étape, à savoir le réchauffage de la feuille de verre, s'effectue dans un four que les feuilles de verre traversent convoyées par exemple sur un lit de rouleaux. Toutefois, le problème du positionnement n'est pas pour autant réglé car les vitesses de défilement et les longueurs des fours sont telles que deux feuilles de verre successives n'ont pas toujours des trajectoires rigoureusement égales. Les écarts de trajectoires peuvent s'analyser en deux types de défauts : des glissements perpendiculairement à l'axe du convoyeur et des rotations par rapport à cet axe, défauts auxquels on remédie respectivement avec des dispositifs de positionnement latéral et avec des dispositifs de positionnement frontal.

Comme indiqué dans la demande de brevet EP-A-267 120, le positionnement latéral est par exemple obtenu au moyen de règles de guidage qui se resserrent au fur et à mesure que l'on progresse dans le sens d'avancement du convoyeur et qui limitent un passage pour la feuille de verre. Le verre frotte contre les règles, mais n'est pas stoppé par celles-ci.

Toutefois, comme les feuilles de verre destinées à des vitrages de véhicules automobiles ne sont jamais formées par des plaques rectangulaires mais présentent presque systématiquement une largeur qui varie d'un bout à l'autre du vitrage, ce positionnement latéral n'est pas suffisant et doit être complété par un positionnement frontal comportant selon EP-A-267 120 une phase d'arrêt de la feuille de verre.

Pour faire acquérir à la feuille de verre l'orientation voulue, on place sur son chemin un butoir constitué par exemple par deux butées - qui est nécessairement heurté par une extrémité du bord avant de la feuille et est maintenu en place un temps suffisant pour que le verre soit réorienté par le convoyeur continuant à entraîner la feuille de verre. Tant que le feuille de verre est au moins pour partie immobilisée par le butoir, elle frotte toujours au même endroit sur les rouleaux qui peuvent alors laissés une empreinte sur le verre qui en raison de sa température élevée est très facilement marqué. Le positionnement frontal constitue de ce fait la source de nombreux défauts optiques.

L'invention a pour but un nouveau mode de positionnement frontal d'une feuille de verre qui minimise les frottements du verre sur les rouleaux et par conséquence le risque de marquage.

La solution proposée selon l'invention est un procédé de positionnement selon la revendication 1 d'une feuille de verre qui défile sur un convoyeur, selon lequel on interpose sur le chemin de la feuille de verre un butoir contre lequel heurte une extrémité du bord avant de la feuille de verre et qui est maintenu au contact du verre un temps suffisant pour que le verre soit réorienté par le convoyeur qui continue à entraîner la feuille de verre, ledit butoir étant pendant toute la durée du positionnement animé d'un mouvement de translation parallèle au défilement du verre, dans le même sens que celui-ci, à une vitesse inférieure à celle du convoyeur.

A l'encontre des procédés connus de l'art, le positionnement frontal d'une feuille de verre s'effectue selon l'invention sans arrêter le défilement de la feuille de verre, de sorte que le verre chaud est seulement freiné sur les rouleaux ce qui permet de préserver sa qualité optique.

Avantageusement, le butoir est mis en mouvement avant même que l'extrémité la plus avant de la feuille de verre ne le heurte. Cette mise en mouvement est de préférence déclenchée par la détection en amont de l'arrivée d'une feuille de verre, de préférence au moyen d'un barrage lumineux par exemple tel que celui connu de EP-A-267 850.

Par ailleurs, une fois le positionnement obtenu, le butoir est avantageusement accéléré de sorte qu'on lui communique une vitesse supérieure à la vitesse du convoyeur de façon à décoller le butoir de la feuille de verre sans risquer de soulever légèrement la feuille de verre qui en raison de sa température élevée a tendance à coller au butoir.

A partir du moment où le butoir est suffisamment éloigné de la feuille de verre, il peut être escamoté, c'est-à-dire éloigné du chemin de la feuille de verre et ramené de préférence à grande vitesse jusqu'à sa position initiale, en attente de la feuille de verre suivante. Ce retour s'effectue bien sûr alors que le butoir est suffisamment éloigné du chemin parcouru par la feuille de verre pour qu'il ne la touche pas.

Un dispositif conçu pour la mise en oeuvre du procédé de positionnement proposé est également revendiqué dans la revendication 7. Ce dispositif est essentiellement constitué par une poutre, sur laquelle est fixé le butoir, portée à chacune de ses extrémités par des rails parallèles à l'axe du convoyeur portés par des chariots mobiles et roulant sur des galets, le déplacement des chariots étant obtenu par la rotation d'une vis sans fin ou d'un vérin à vis disposé parallèlement à l'axe du convoyeur.

Les déplacements verticaux de la poutre - pour le passage des butées en position haute en fin de positionnement puis à nouveau en position basse pour une feuille de verre est de préférence obtenu en montant un galet sur un excentrique actionné par un vérin rotatif pneumatique, avec de préférence une commande électrique numérique, fonction de la position du chariot et de son sens de déplacement.

De préférence, un même moteur sert à l'entraînement simultané des deux chariots placés de chaque côté du convoyeur, des courroies de transmission faisant tourner les vis ou vérins à vis à des vitesses parfaitement identiques. Ce moteur, placé par exemple sous le convoyeur, est de préférence équipé d'un variateur de vitesse ce qui permet de déplacer les chariots à une vitesse constante relativement lente - et dans le sens de défilement du convoyeur - pendant le positionnement puis d'accélérer pour décoller le butoir et enfin d'assurer le déplacement retour de préférence plus rapide que le déplacement aller, ceci pour autoriser des cadences élevées avec un faible intervalle entre deux feuilles de verre successives.

Par définition, lorsque le bord avant de la feuille de verre est aligné sur le butoir, cette dernière est parfaitement orientée. Ce butoir est par exemple formé d'une seule pièce continue du type volet ou d'une série de pièces espacées les unes des autres du type butées. Généralement, on utilise deux butées, aussi écartées que possible compte tenu de la longueur du bord avant, afin d'obtenir une plus grande précision du positionnement. De préférence, le montage de ces butées autorise un réglage de leur position par rapport à la poutre au moins dans une direction perpendiculaire à celle-ci de façon à permettre le positionnement de feuilles dont le bord avant n'est pas sensé être perpendiculaire à l'axe du convoyeur. La possibilité de régler l'écartement des butées est également avantageuse. Pour ces réglages on peut par exemple utiliser des montages par coulisses.

D'autres détails et caractéristiques avantageuses de l'invention sont décrits ci-après en référence aux dessins annexés qui représentent :

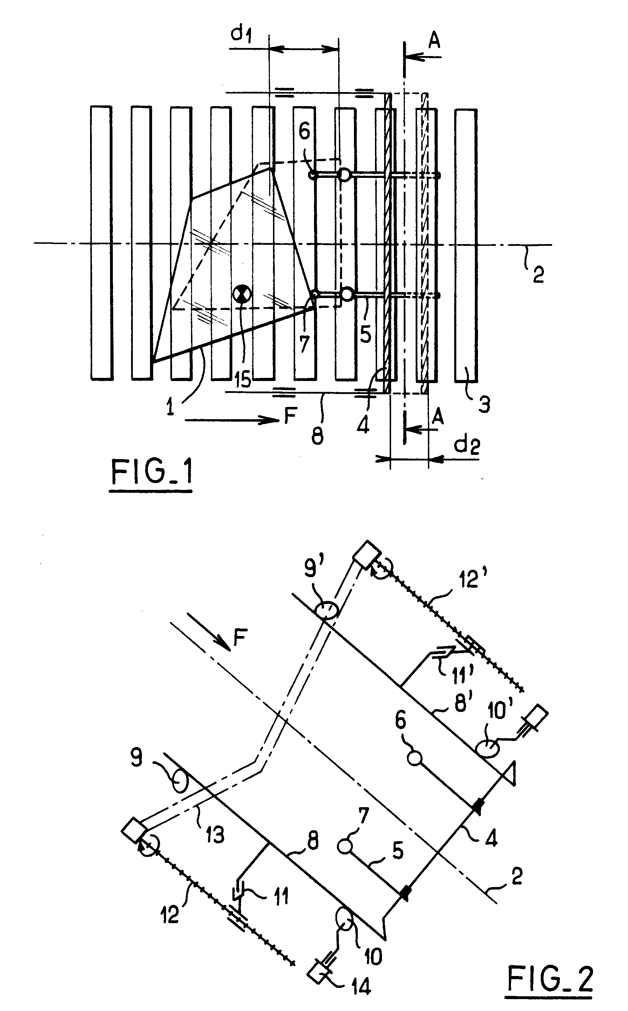

. **figure 1** : un schéma en vue de dessus d'une feuille de verre avant et après son positionnement,

. **figure 2** : une vue en perspective de la figure 1,

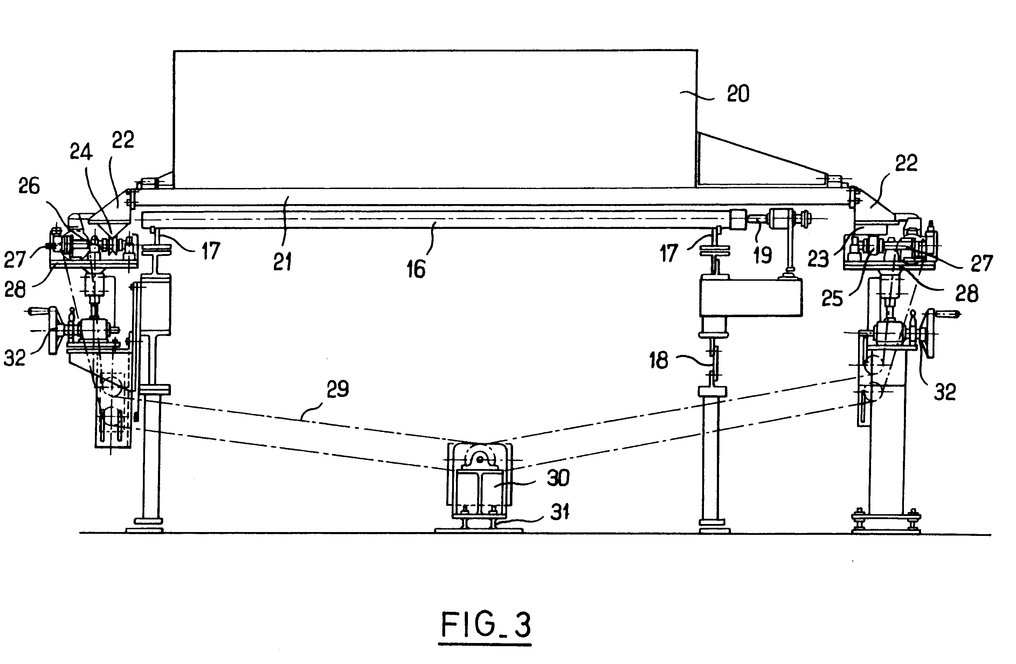

. **figure 3** : une vue détaillée selon l'axe A-A de la figure 1, d'un dispositif de positionnement selon l'invention.

A la figure 1 est schématisée une feuille de verre 1 défilant dans la direction indiquée par la flèche F sur un convoyeur d'axe 2 constitué par un lit de rouleaux moteurs 3. La feuille de verre s'apprête par exemple à pénétrer dans une station de bombage, notamment une station conforme aux enseignements de FR-A-2 549 465 ou FR-A-2 604 992. Dans ce but a été chauffée à une température voisine de 650°C ce qui la rend particulièrement plastique et sensible au marquage par tout objet venant à son contact.

La rotation des rouleaux 3 imprime au verre une vitesse V1 par exemple de l'ordre de 20 cm/s.

Une poutre 4 est disposée au-dessus du convoyeur parallèlement aux rouleaux. Sur cette poutre 4 sont fixés par exemple par des coulisses des bras 5 portant des butées 6, 7 fixées de même de façon coulissante sur les bras 5. Les butées 6 et 7 s'avancent en direction du convoyeur et la droite passant par ces butées correspond à la position souhaitée pour le bord avant de la feuille de verre.

Comme il est plus particulièrement visible à la figure 2, la poutre 4 est portée à ses extrémités par des rails placés de chaque côté du convoyeur et parallèles à l'axe 2. Les rails 8, 8' roulent sur des galets 9, 9' et 10, 10' et sont entraînés en translation au moyen de chariots 11, 11'. Le chariot 11 est déplacé grâce à un vérin à vis 12, parallèle aux rails 8, entraîné en rotation au moyen d'une courroie 13 actionnée par un moteur placé sous le convoyeur. Il en est de même pour le chariot 11', de sorte que la poutre est entraînée à la même vitesse par ses deux extrémités.

Les galets 9 et 10 servent aux mouvements de montée/baisse de la poutre - et des butées qui lui sont associées. Le galet 9 est de préférence à hauteur fixe, en libre rotation. Le galet aval 10 est lui monté sur un excentrique actionné par exemple par un vérin rotatif pneumatique. Ce vérin est avantageusement actionné par une commande électrique numérique, fonction de la position du chariot et de son sens de déplacement.

Le cycle de positionnement est le suivant : en position d'attente, la poutre est maintenue fixe au-dessus des rouleaux et à une distance suffisamment grande du convoyeur pour que les butées soient en position inactives, autrement dit en position haute.

Quand une feuille de verre pénètre dans la zone du positionnement, elle est repérée par un détecteur sans contact 15 par exemple un barrage lumineux associé à une cellule photoélectrique ou une caméra. Les butées sont alors descendues en position basse, c'est-à-dire en position active. Simultanément - ou avec un retard fixé en fonction de la distance entre le détecteur 15 et les butées 6, 7 - on commence à déplacer la poutre 4 parallèlement à l'axe 2 du convoyeur. Avantageusement, le retard est choisi de manière à ce que la phase d'accélération - pendant laquelle la poutre 4 passe d'une vitesse nulle à une vitesse constante V2 -soit achevée au moment où l'extrémité du bord avant se présentant en premier lieu vient heurter la première butée 7.

Pour des questions d'encombrement, la distance d2 parcourue par les butées est forcément limitée ; V2 doit donc être choisie suffisamment faible pour que la distance D1 susceptible d'être parcourue pendant le même temps par l'extrémité de la feuille de verre la plus en retrait soit suffisante pour que cette extrémité rattrape la butée 6 qui pendant le même temps parcourt la distance D2. Par ailleurs pour minimiser l'intensité des frottements subits par la feuille de verre qui est retenue par butée 7, la vitesse V2 doit être aussi proche que possible que V1. Un bon compromis est d'opter par exemple pour une vitesse V2 inférieure de moitié à la vitesse V1 du convoyeur.

En bout de course, les butées 6 et 7 doivent être escamotées pour laisser continuer son chemin à la feuille de verre. Pour éviter que le verre (qui en raison de sa température élevée colle un peu aux butées) n'ait tendance à s'écarter du convoyeur au moment où les butées sont relevées, cet escamotage est obtenu en deux temps : on accélère les butées pour leur communiquer une vitesse V2' supérieure à V1 et on les relève une fois à distance du verre, au moyen du galet 10.

La poutre portant les butées est alors ramenée de préférence à grande vitesse en position initiale d'attente, prête pour le positionnement de la feuille de verre suivante, la cadence de défilement des feuilles de verre étant dans certains cas très grande ce qui nécessite des vitesses retours parfois bien supérieures à la vitesse V1.

La figure 3 montre une vue de face d'un convoyeur équipé d'un système de positionnement selon l'invention. Sur cette figure 3, le dispositif de positionnement est représenté butées hautes. Le convoyeur est constitué par des rouleaux 16 posés sur des galets 17 montés sur des supports idoines 18. Par une de leurs extrémités, les rouleaux 16 sont entraînés à une vitesse V1 par des pignons 19. L'ensemble du convoyeur est protégé par un capot fixé à un bâti 20 de façon à maintenir les feuilles de verre à la bonne température.

Le système de positionnement comporte une poutre 21 montée au-dessus des rouleaux 16 et parallèles à ceux-ci. La poutre 21 est munie de préférence de deux butées montées par exemple par l'intermédiaire de coulisses. Ces butées ne sont pas visibles à la figure 3. De chaque côté de la poutre 21 sont prévues des équerres de fixation 22 sur lesquelles sont fixées des rails 23 et 24, le rail 23 roule sur un galet 25. Le rail 24 formé par une pièce triangulaire roule sur un galet 26 formé par une roue à gorge, ce qui permet d'assurer une fonction de guidage. Les deux galets 25 et 26 sont montées sur des excentriques actionnés par des vérins pneumatiques 27.

Par ailleurs, les équerres de fixation 22 sont fixées aux chariots 28 qui coulissent le long d'un axe perpendiculaire au plan du dessin, grâce à un vérin à vis entraîné en rotation par la courroie 29 qui par un jeu de poulies de renvoi est amenée à l'arbre d'un moteur 30 fixé au sol par des pieds 31.

Sur cette figure 3, on peut également observé que la hauteur des chariots 28 peut être réglée en actionnant des manivelles 32, ce qui permet de régler la distance entre les butées et les rouleaux 16 du convoyeur pour tenir compte des différentes épaisseurs des feuilles de verre.

Avantageusement, la poutre 21 peut être soulevée au moyen de crochets fixés sur le bâti 20, lorsque ce dernier est relevé par exemple pour évacuer des feuilles de verre bloquées sur le convoyeur en raison de problèmes en aval de la ligne, notamment au niveau du formage.

Le dispositif de positionnement proposé selon l'invention permet de limiter grandement l'intensité du frottement des feuilles de verre sur les rouleaux et de ce fait la qualité optique des vitrages est améliorée. De plus, ce dispositif peut fonctionner même dans une installation dans laquelle les feuilles de verre se suivent de très près, par exemple où les feuilles de verre sont espacées de moins de 50 centimètres - pour une vitesse de défilement de l'ordre de 20 cm/s, comme c'est le cas en particulier des installations de bombage connus de FR-A-2 549 465 et FR-A-2 604 992.

## Revendications

1. Procédé de positionnement d'une feuille de verre (1) défilant sur un convoyeur selon lequel on interpose sur le chemin de la feuille de verre (1) un butoir (6,7) contre lequel heurte une extrémité du bord avant de la feuille de verre (1) et qui est maintenu au contact du verre pendant un temps suffisant pour que le verre soit réorienté par le convoyeur qui continue à entraîner la feuille de verre (1), **caractérisé en ce que** pendant toute la durée du positionnement, le butoir (6,7) est animé d'un mouvement de translation parallèle au défilement du verre, dans le même sens que celui-ci, à une vitesse inférieure à la vitesse V1 du convoyeur.

2. Procédé de positionnement selon la revendication 1, **caractérisé en ce que** la vitesse V2 du butoir (6,7) est maintenue constante tant que la feuille de verre (1) est à son contact.

3. Procédé de positionnement selon la revendication 1 ou 2, **caractérisé en ce que** le butoir (6,7) est mis en mouvement avant d'être heurté par la feuille de verre (1), la phase d'accélération étant terminée lorsque le butoir (6,7) est heurté par l'extrémité du bord avant.

4. Procédé de positionnement selon l'une des revendications précédentes, **caractérisé en ce que** le positionnement terminé, le butoir (6,7) est accéléré et animé d'une vitesse V2′ supérieure à celle du convoyeur, puis est escamoté.

5. Procédé de positionnement selon la revendication 1, **caractérisé en ce que** le butoir (6,7) obéit à la loi de vitesse suivante :
   - attente en position de départ avec le butoir (6,7) escamoté,
   - descente du butoir (6,7),
   - accélération du butoir (6,7) jusqu'à la vitesse V2,
   - translation à vitesse V2 constante,
   - accélération en fin de positionnement et escamotage du butoir (6,7),
   - retour en position de départ.

6. Procédé de positionnement selon la revendication 5, **caractérisé en ce que** la vitesse V2 est inférieure de moitié à la vitesse V1 du convoyeur.

7. Dispositif de positionnement d'une feuille de verre (1) (1) défilant sur un convoyeur constitué d'une poutre (21) sur laquelle est fixé un butoir (6,7) portée à chacune de ses extrémités par des rails (8) parallèles à l'axe (2) du convoyeur, portés par des chariots mobiles (11) roulant sur des galets (9, 10), le déplacement des chariots (11) étant obtenu par la rotation d'une vis (12) parallèle à l'axe (2) du convoyeur.

8. Dispositif de positionnement selon la revendication 7, **caractérisé en ce que** les galets (10) sont montés sur des excentriques actionnés par des vérins rotatifs (14) de préférence à commande numérique.

9. Dispositif de positionnement selon la revendication 7 ou 8, **caractérisé en ce que** le butoir (6, 7) est formé par des butées fixées par des coulisses à des bras (5) fixés à la poutre (4, 21).

10. Application du dispositif de positionnement selon l'une des revendications 7 à 9, à une installation de bombage à cadence élevée de défilement des feuilles de verre.

**Patentansprüche**

1. Verfahren zur Positionierung einer auf einer Fördereinrichtung transportierten Glasscheibe (1), bei dem man auf dem Weg der Glasscheibe (1) einen Anschlag (6,7) zwischenschaltet, gegen den ein Ende der vorderen Kante der Glasscheibe (1) stößt, und der solange in Kontakt mit der Scheibe gehalten wird, bis die Glasscheibe durch die die Glasscheibe (1) weiterhin mitnehmende Fördereinrichtung wieder ausgerichtet ist, **dadurch gekennzeichnet, daß** der Anschlag (6,7) während der gesamten Dauer der Positionierung eine zum Transportweg der Glasscheibe parallele Translationsbewegung in derselben Richtung mit einer Geschwindigkeit ausführt, die niedriger als die Geschwindigkeit V1 der Fördereinrichtung ist.

2. Verfahren zur Positionierung nach Anspruch 1, **dadurch gekennzeichnet, daß** die Geschwindigkeit V2 des Anschlags (6,7) konstant gehalten wird, solange sich die Glasscheibe (1) mit dem Anschlag in Kontakt befindet.

3. Verfahren zum Positionieren nach Anspruch 1, **dadurch gekennzeichnet, daß** der Anschlag (6,7) vor dem Anstoßen durch die Glasscheibe (1) in Bewegung gesetzt wird, wobei die Beschleunigungsphase beendet wird, sobald der Anschlag (6,7) durch das vorderste Ende der Scheibe berührt wird.

4. Verfahren zur Positionierung nach einem der vorhergehenden Ansprüche, **dadurch gekennzeichnet, daß** nach Beendigung der Positionierung der Anschlag (6,7) auf eine Geschwindigkeit V2′ beschleunigt wird, die höher ist als die der Fördereinrichtung, und dann eingezogen wird.

5. Verfahren zur Positionierung nach Anspruch 1, **dadurch gekennzeichnet, daß** der Anschlag (6,7) der folgenden Geschwindigkeitsregelung unterworfen ist:
   - Warten in der Startposition bei eingezogenem Anschlag (6,7),
   - Herunterfahren des Anschlags (6,7),
   - Beschleunigung des Anschlags (6,7) auf die Geschwindigkeit V2,
   - Translation bei konstanter Gesschwindigkeit V2,
   - Beschleunigung am Ende der Positionierung und Einziehen des Anschlags (6,7)
   - Rückkehr in die Startposition.

6. Verfahren zur Positionierung nach Anspruch 5, **dadurch gekennzeichnet, daß** die Geschwindigkeit V2 um die Hälfte niedriger ist als die Geschwindigkeit V1 der Fördereinrichtung.

7. Vorrichtung zur Positionierung einer auf einer Fördereinrichtung transportierten Glasscheibe (1), mit einem Träger (21), auf dem ein Anschlag (6,7) befestigt ist, wobei der Träger an jedem seiner Enden von zur Achse (2) der Fördereinrichtung parallelen Schienen (8) getragen wird, die durch auf Rollen (9,10) laufenden bewegliche Schlitten (11) getragen werden, wobei die Bewegung der Schlitten (11) durch die Drehung einer zur Achse (2) der Fördereinrichtung parallelen Schraubspindel (12) bewirkt wird.

8. Vorrichtung zur Positionierung nach Anspruch 7, **dadurch gekennzeichnet, daß** die Rollen (10) auf Exzentern angebracht sind, die durch Drehwinden (14) mit vorzugsweise numerischer Steuerung angetrieben werden.

9. Vorrichtung zur Positionierung nach Anspruch 7 oder 8, **dadurch gekennzeichnet, daß** der Anschlag (6,7) durch Anschlagteile gebildet ist, die durch Kulissen an am Träger (4,21) befestigten Armen (5) befestigt sind.

10. Verwendung der Vorrichtung zur Positionierung nach einem der Ansprüche 7 bis 9 in einer Biege-Anlage mit erhöhter Glasscheiben-Durchlaufleistung.

**Claims**

1. Method of positioning a glass sheet (1), travelling on a conveyor, according to which a buffer (6, 7) is interposed on the path of the glass sheet (1), against which buffer an end of the front edge of the glass sheet (1) strikes and which is kept in contact with the glass for a sufficient time for the glass to be reorientated by the conveyor, which continues to entrain the glass sheet (1), characterized in that throughout the duration of the positioning the buffer (6, 7) is given a translation movement parallel to the direction of travel of the glass and in the same sense, at a velocity lower than the velocity V1 of the conveyor.

2. Positioning method according to Claim 1, characterized in that the velocity V2 of the buffer (6, 7) is kept constant while the glass sheet (1) is in contact with it.

3. Positioning method according to Claim 1 or 2, characterized in that the buffer (6, 7) is set in motion before being struck by the glass sheet (1), the acceleration phase being terminated when the buffer (6, 7) is struck by the end of the front edge.

4. Positioning method according to one of the preceding Claims, characterized in that, the positioning having been completed, the buffer (6, 7) is accelerated and is given a velocity V2' higher than that of the conveyor, and is then retracted.

5. Positioning method according to Claim 1, characterized in that the buffer (6, 7) obeys the following velocity law:
   - waiting in a starting position with the buffer (6, 7) retracted,
   - descent of the buffer (6, 7),
   - acceleration of the buffer (6, 7) up to the velocity V2,
   - translation at constant velocity V2,
   - acceleration at the end of positioning and retraction of the buffer (6, 7),
   - return to the starting position.

6. Positioning method according to Claim 5, characterized in that the velocity V2 is less than one-half the velocity V1 of the conveyor.

7. Device for positioning a glass sheet (1) travelling on a conveyor, constituted of a beam (21) on which is fixed a buffer (6, 7), the beam being carried at each of its ends by rails (8) parallel to the axis (2) of the conveyor and carried by movable carriages (11) running on rollers (9, 10), the displacement of the carriages (11) being produced by the rotation of a screw (12) parallel to the axis (2) of the conveyor.

8. Positioning device according to Claim 7, characterized in that the rollers (10) are mounted on eccentrics actuated by rotary jacks (14), preferably with numerical control.

9. Positioning device according to Claim 7 or 8, characterized in that the buffer (6, 7) is formed of stops fixed by sliders to arms (5) fixed to the beam (4, 21).

10. Application of the positioning device according to one of Claims 7 to 9 to a curving apparatus having a high throughput rate of the glass sheets.

FIG_1

FIG_2

FIG_3